# FASCICULE DE BREVET EUROPEEN

(11) **EP 3 956 790 B1**
(45) Date de publication et mention de la délivrance du brevet: **28.01.2026**
(21) Numéro de dépôt: 20717903.7
(22) Date de dépôt: 16.04.2020
(51) Int. Cl.: G06F 21/53, G06F 9/455, G06F 21/57, H04L 9/08, H04L 9/32, H04W 12/10

(54) **PROCÉDÉ DE FOURNITURE D'ATTESTATIONS MIS EN OEUVRE PAR UNE PLATEFORME INFORMATIQUE VIRTUALISÉE**
VERFAHREN ZUR BEREITSTELLUNG VON DURCH EINE VIRTUELLE RECHENPLATTFORM IMPLEMENTIERTEN ZERTIFIKATEN
METHOD FOR PROVIDING CERTIFICATES IMPLEMENTED BY A VIRTUALISED COMPUTING PLATFORM

(30) Priorité: 19.04.2019 FR 1904219
(43) Date de publication de la demande: 23.02.2022
(73) Titulaire: Orange, 92130 Issy-les-Moulineaux (FR)
(72) Inventeur: NEDELCU, Adina Ioana, 92326 Châtillon Cedex (FR); ARFAOUI, Ghada, 92326 Châtillon Cedex (FR)
(74) Mandataire: Cabinet Beau de Loménie
(86) Numéro de dépôt international: PCT/EP2020/060725
(87) Numéro de publication internationale: WO 2020/212501

(56) Documents cités:
- EP-A1- 3 217 310
- WO-A1-2018/162060
- ETSI: "Network Functions Virtualisation (NFV); Trust; Report on Attestation Technologies and Practices for Secure Deployments", 31 October 2017 (2017-10-31), pages 2017 - 10, XP055663520, Retrieved from the Internet <URL:https://www.etsi.org/deliver/etsi_gr/NFV-SEC/001_099/007/01.01.01_60/gr_nfv-sec007v010101p.pdf> [retrieved on 20200130]

## Description

### Technique antérieure

L'invention se situe dans le domaine des plateformes informatiques virtualisées.

Le document WO 2018/162060 A1 est un document pertinent dans ce domaine.

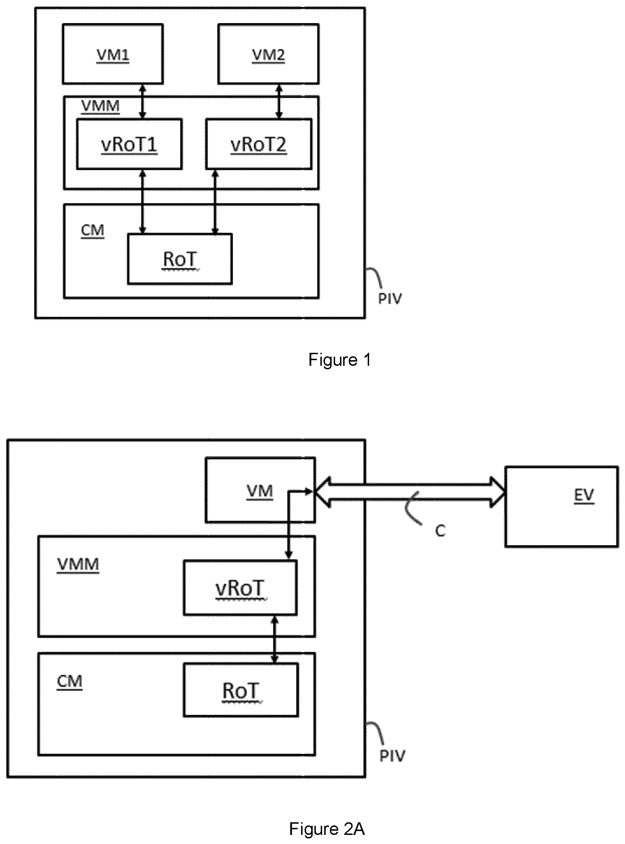

La figure 1 représente l'architecture connue d'une telle plateforme PIV. Elle comporte dans cet exemple trois couches (en anglais layers), à savoir :
- une couche matérielle CM ;
- une couche de virtualisation VMM (en anglais Virtual Machine Manager) ou hyperviseur ; et
- une couche de machines virtuelles ou VMs.

D'une façon générale, le mécanisme de virtualisation donne aux ressources d'une couche, la perception d'une utilisation exclusive de ressources sous-jacentes potentiellement partagées, ces ressources sous-jacentes apparaissant sous la forme de multiples instances isolées allouées à des ressources d'une couche supérieure. Chaque ressource de niveau supérieur estime qu'elle dispose de l'utilisation exclusive de fonctionnalités rendues par des ressources sous-jacentes et n'ignore pas qu'elle ne s'exécute pas directement sur le matériel.

La plateforme informatique virtualisée peut être utilisée pour assurer les fonctionnalités d'un réseau mobile de nouvelle génération ou mettre en œuvre une plateforme NFV (en anglais Network Function Virtualization).

Chaque machine virtuelle exécute une instance de système d'exploitation unique, appelée système d'exploitation invité, et fonctionne indépendamment des autres machines virtuelles de la plateforme. Chaque système d'exploitation invité nécessite une machine virtuelle isolée pour son exécution.

La couche logicielle de virtualisation VMM ou hyperviseur est une couche s'exécutant sous les machines virtuelles fournissant l'environnement d'exécution.

La présente invention se situe plus particulièrement dans le contexte des plateformes informatiques virtualisées comportant une racine de confiance RoT (en anglais Roots of Trust).

De manière conventionnelle, une telle racine de confiance RoT est configurée pour exécuter une ou plusieurs fonctions spécifiques de sécurisation de la plateforme virtuelle PIV. Il s'agit donc d'un élément auquel il est fait confiance pour se comporter de manière attendue, un mauvais comportement de la racine de confiance RoT ne pouvant pas être détecté. Il convient de noter qu'une telle racine de confiance RoT peut être constituée d'éléments logiciels mais elle est préférentiellement implémentée sous la forme d'un module matériel.

La racine de confiance RoT offre ainsi les services de sécurisation de la plateforme PIV. Elle est notamment utilisée pour stocker et protéger les clés cryptographiques de la plateforme PIV, ces clés ne pouvant être utilisées par les autres ressources sans cette racine de confiance RoT.

Cette racine de confiance RoT peut être constituée par un module de confiance TPM conforme aux spécifications techniques définies par le consortium Trusted Computing Group (TCG). Il peut notamment être conforme au standard ISO/IEC 11889.

Dans l'exemple de la figure 1, l'hyperviseur VMM comporte, pour chaque machine virtuelle VM, une racine de confiance virtualisée vRoT (en anglais Virtualized Roots of Trust) qui fournit, au système d'exploitation invité de cette machine virtuelle VM, les services de la racine de confiance RoT. Une telle racine de confiance virtualisée vRoT fait donc référence à une combinaison de fonctionnalités fournies par la racine de confiance RoT associée, ainsi que par l'hyperviseur (ce dernier donnant accès aux fonctionnalités de la racine de confiance RoT).

Dans l'exemple de la figure 1, la plateforme informatique virtualisée PIV comporte deux machines virtuelles VM1, VM2, chaque machine virtuelle VMi bénéficiant des ressources d'une racine de confiance virtualisée vRoTi, les racines de confiance virtualisées vRoTi étant des instances indépendantes représentatives de la même racine de confiance RoT.

L'invention ne se limite pas à une telle architecture.

Pour plus de renseignements sur les concepts et définitions introduits pour la figure 1, l'homme du métier peut se reporter au document [TCG].

L'invention se situe plus particulièrement dans le contexte de l'attestation des plateformes informatiques virtualisées.

D'une manière générale, dans le contexte de l'invention, l'attestation est un processus permettant à une plateforme informatique virtualisée d'affirmer une propriété à une entité de vérification, en apportant la preuve de cette propriété à cette entité. Par exemple, la plateforme informatique virtualisée peut affirmer qu'elle est digne de confiance et qu'elle n'a pas été corrompue. Dans cet exemple, ce processus d'attestation consiste à fournir une preuve de l'intégrité de la plateforme.

D'autres propriétés peuvent faire l'objet d'une attestation de la plateforme, et notamment, toujours à titre d'exemple :
- une attestation relative à la localisation de la plateforme ;
- une attestation relative à des droits d'accès gérés par la plateforme.

L'invention se situe encore plus particulièrement dans le contexte de l'attestation approfondie (en anglais deep attestation) dans laquelle un tel processus d'attestation est opéré pour chacune des couches de la plateforme informatique virtualisée.

En pratique, l'attestation de la couche matérielle CM est implicite car celle-ci est directement conférée par la racine de confiance RoT présente dans cette couche.

Par conséquent, en reprenant l'exemple de la figure 1, l'attestation approfondie de la plateforme PIV implique :
- l'attestation de chaque machine virtuelle VM ;
- l'attestation de la couche de virtualisation (ou hyperviseur) VMM ; et
- la fourniture d'une liaison vérifiable et explicite entre les couches (en anglais layer binding problem), preuve que les différentes attestations (attestation de l'hyperviseur VMM, attestation de chacune des machines virtuelles VMs) ont bien été délivrées pour des couches d'une même plateforme PIV.

Le statut de confiance d'une plateforme informatique virtualisée PIV peut être déterminé par un tiers uniquement à l'aide de primitives de la racine de confiance RoT, ces primitives étant intrinsèquement fiables et implémentées par un module logiciel mais préférentiellement matériel de cette plateforme.

La couche de virtualisation VMM (autrement dit l'hyperviseur) utilise pour générer ses données d'attestation les racines de confiance matérielles RoT du module matériel de confiance.

Ces racines de confiance matérielles RoT offrent notamment des services de protection des clés cryptographiques et des services d'exécution sécurisée d'opérations cryptographiques. Ces services sont nécessaires pour permettre à un tiers de vérifier l'état de confiance de la plateforme PIV.

Contrairement à la couche de virtualisation VMM qui doit s'exécuter directement sur la couche matérielle CM, les machines virtuelles VM s'exécutent dans un environnement d'exécution créé par l'hyperviseur, appelé plateforme virtuelle.

Ces plateformes virtuelles peuvent utiliser les fonctionnalités des racines de confiance matérielles RoT, mais l'hyperviseur est impliqué dans la configuration de l'accès à ces fonctionnalités ainsi que dans la communication entre ces plateformes virtuelles et les racines de confiance matérielles RoT.

Ces services de sécurisation, par exemple de protection des clés cryptographiques et des services d'exécution sécurisée d'opérations cryptographiques, peuvent être considérés eux-mêmes comme des racines virtuelles de confiance vRoTi.

Comme mentionné précédemment, l'attestation d'une plateforme informatique virtualisée implique des étapes de rapport et de vérification de tous ses composants logiciels, autrement dit des machines virtuelles VMi et de la couche de virtualisation ou hyperviseur VMM.

Pour son attestation, chaque machine virtuelle VMi exploite l'instance de plateforme sécurisée virtuelle qui lui est associée, et en particulier les fonctionnalités de sécurité offertes par les racines virtuelles de confiance vRoTi.

Ces racines virtuelles de confiance vRoTi peuvent être implémentées de façon logicielle et / ou matérielle, dans le sens où la racine virtuelle de confiance vRoTi communique avec la RoT. Elles ont pour objectif d'inférer la confiance dans les attestations des machines virtuelles VM en établissant une chaîne de confiance de la couche matérielle CM jusqu'à la machine virtuelle.

Par conséquent, une évaluation de l'état d'une machine virtuelle ne peut être effectuée que si l'état de l'hyperviseur VMM est également validé dans le cadre de l'attestation de cette machine virtuelle VMi.

Ce processus constitue l'attestation approfondie (en anglais « deep attestation ») introduite précédemment : elle permet d'étendre la confiance des racines de confiance RoT, en passant par l'hyperviseur avec la mise en œuvre des racines virtuelles de confiance vRoTi, jusqu'aux machines virtuelles VMi et donc à la plateforme informatique virtualisée PIV dans son ensemble.

Une attestation approfondie implique la récupération et la validation ultérieure, par une entité de vérification distante, des données d'attestation des machines virtuelles VMi et des données d'attestation de l'hyperviseur VMM sous-jacent. Du point de vue du vérificateur distant, ces deux rapports d'attestation peuvent être fournis par deux entités indépendantes. Par conséquent, l'entité de vérification distante requiert la preuve que l'hyperviseur VMM, dont il témoigne dans le cadre d'une attestation approfondie, exécute réellement une instance de la racine virtuelle de confiance vRoTi associée à la machine virtuelle VMi cible de l'attestation. Ce problème de la création d'une liaison explicite et vérifiable entre l'attestation d'une machine virtuelle et l'attestation de l'hyperviseur sur lequel les instances vRoT de la machine virtuelle s'exécutent constitue le problème de liaison de couches (en anglais « layer binding problem ») déjà mentionné.

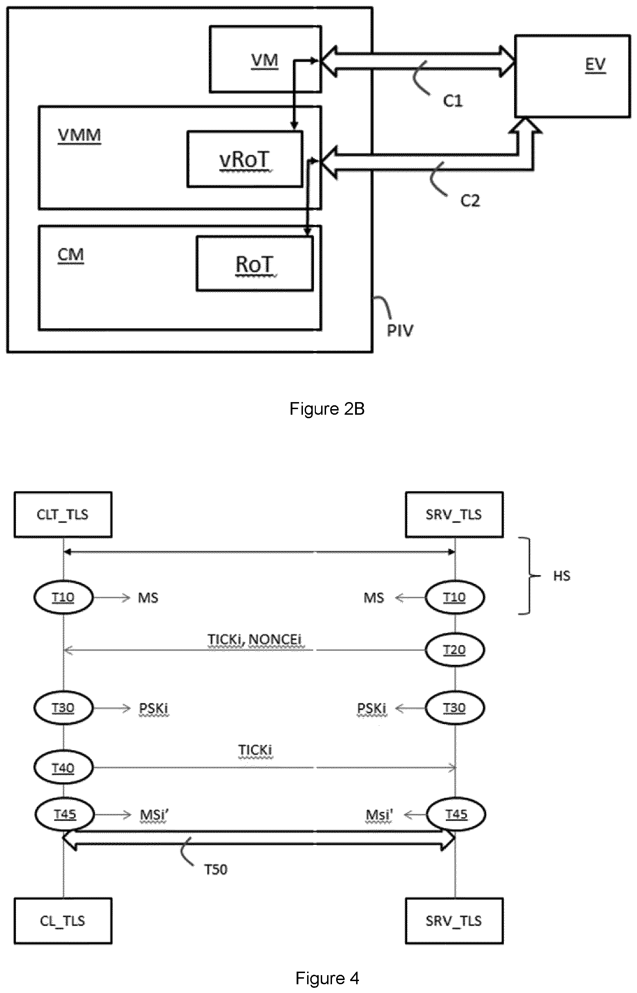

Les figures 2A et 2B illustrent deux modèles d'attestations approfondies, qui diffèrent par la manière dont les données d'attestation de l'hyperviseur sont transmises à l'entité de vérification distante :
- via le canal d'attestation de la machine virtuelle VM (attestation approfondie à canal unique) ; ou
- via un canal distinct dédié (attestation approfondie multicanal).

La figure 2A représente le mécanisme connu d'attestation approfondie à canal unique.

Dans ce modèle, l'entité de vérification distante EV établit un canal de communication C avec la machine virtuelle VM via lequel il obtient les données d'attestation spécifiques à la machine virtuelle VM ainsi que les données d'attestation de l'hyperviseur VMM sur lequel la machine virtuelle s'exécute.

Dans ce modèle, le problème de la liaison des couches peut être résolu en incluant, dans les données d'attestation de l'hyperviseur, des données spécifiques au module de confiance virtuel vRoT fournissant ainsi une preuve cryptographique vérifiable de la liaison des couches.

Ce modèle n'est pas adapté aux déploiements dans lesquels un grand nombre de machines virtuelles s'exécutent sur le même hyperviseur, notamment car la génération de rapports multiples d'attestations de l'hyperviseur ne peut s'effectuer en parallèle.

La figure 2B représente le modèle connu d'attestation multicanal dans lequel l'entité de vérification distante EV établit un premier canal de communication C1 avec la machine virtuelle pour récupérer ses données d'attestation, puis, par la suite, un deuxième canal de communication indépendant C2 avec l'hyperviseur pour récupérer ses données d'attestation.

Ce modèle s'adapte bien aux déploiements impliquant un grand nombre de machines virtuelles s'exécutant sur un même hyperviseur. Malheureusement, la liaison entre les données d'attestation des différentes couches est très lâche, et le problème de la liaison des couches n'est pas simple à résoudre.

Pour plus de renseignements sur les mécanismes d'attestation, l'homme du métier peut se reporter aux références [NFV] et [PRA].

L'invention vise à offrir un mécanisme d'attestation approfondie d'une plateforme informatique virtualisée qui ne présente pas les inconvénients de l'art antérieur.

### Exposé de l'invention

L'invention est définie par les revendications indépendantes.

Selon un premier aspect, l'invention concerne un procédé de fourniture d'attestations mis en œuvre par une plateforme informatique virtualisée comportant une racine de confiance, un hyperviseur et au moins une machine virtuelle, l'hyperviseur mettant en œuvre une racine de confiance virtualisée par machine virtuelle et offrant des services de la racine de confiance, ce procédé comportant :
- une étape d'établissement d'un premier canal sécurisé entre cet hyperviseur et une entité de vérification ;
- une étape d'envoi de données d'attestation de cet hyperviseur dans ledit premier canal sécurisé à destination de l'entité de vérification, ces données d'attestation étant obtenues en utilisant des services de la racine de confiance ;
- une étape de réception, par l'hyperviseur, dans le premier canal sécurisé, en provenance de l'entité de vérification, d'au moins une donnée cryptographique destinée à la racine de confiance;
- une étape d'établissement d'un deuxième canal sécurisé entre au moins une machine virtuelle et l'entité de vérification, des primitives de la racine de confiance appliquées à la donnée cryptographique étant nécessaires pour l'établissement de ce deuxième canal sécurisé ;
- une étape d'envoi de données d'attestation de ladite machine virtuelle dans le canal sécurisé établi pour cette machine virtuelle, ces données d'attestations de machine virtuelle étant obtenues par la machine virtuelle en utilisant des services de la racine de confiance virtualisée associée à ladite machine virtuelle.

Corrélativement, l'invention vise une plateforme informatique virtualisée comportant une racine de confiance, un hyperviseur et au moins une machine virtuelle, l'hyperviseur mettant en œuvre une racine de confiance virtualisée par machine virtuelle et offrant des services de la racine de confiance, dans laquelle :
- ledit hyperviseur est configuré pour :
   - établir un premier canal sécurisé avec une entité de vérification ;
   - obtenir des données d'attestation de cet hyperviseur en utilisant des services de la racine de confiance ;
   - envoyer lesdites données d'attestation de cet hyperviseur dans ledit premier canal sécurisé à destination de l'entité de vérification ;
   - recevoir, en provenance de ladite entité de vérification, dans le premier canal sécurisé, au moins une donnée cryptographique destinée à la racine de confiance ;
- chaque dite machine virtuelle est configurée pour :
   - établir un deuxième canal sécurisé entre cette machine virtuelle et l'entité de vérification, des primitives de la racine de confiance appliquées à la donnée cryptographique étant nécessaires pour l'établissement de ce deuxième canal sécurisé ;
   - envoyer des données d'attestation de cette machine virtuelle dans le deuxième canal sécurisé établi pour cette machine virtuelle, ces données d'attestation étant obtenues par la machine virtuelle en utilisant des services de la racine de confiance virtualisée associée à ladite machine virtuelle.

Corrélativement, l'invention vise aussi un ensemble de programmes d'ordinateurs comportant :
- un programme d'ordinateur sur un support d'information, ce programme étant susceptible d'être mis en œuvre par un hyperviseur d'une plateforme informatique virtualisée, ce programme comportant des instructions configurées pour
- établir un premier canal sécurisé entre l'hyperviseur et une entité de vérification ;
- envoyer des données d'attestation de cet hyperviseur dans le premier canal sécurisé à destination de l'entité de vérification, ces données d'attestation étant obtenues en utilisant des services d'une racine de confiance de la plateforme ;
- recevoir au moins une donnée cryptographique en provenance de l'entité de vérification dans le premier canal sécurisé, cette donnée cryptographique étant destinée à la racine de confiance ;
- un programme d'ordinateur sur un support d'information, une instance de ce programme étant susceptible d'être mise en œuvre par une machine virtuelle de la plateforme informatique virtualisée, cette instance de programme comportant des instructions configurées pour :
- établir un deuxième canal sécurisé entre la machine virtuelle et l'entité de vérification, des primitives de la racine de confiance appliquées à la donnée cryptographique étant nécessaires pour l'établissement de ce deuxième canal sécurisé ;
- envoyer des données d'attestation de la machine virtuelle dans le deuxième canal sécurisé, ces données d'attestation étant obtenues par la machine virtuelle en utilisant des services d'une racine de confiance virtualisée de l'hyperviseur associée à la machine virtuelle et offrant des services de ladite racine de confiance.

Selon un deuxième aspect, l'invention vise aussi un procédé de demande d'attestations d'une plateforme informatique virtualisée comportant une racine de confiance, un hyperviseur et au moins une machine virtuelle, l'hyperviseur mettant en œuvre une racine de confiance virtualisée par machine virtuelle et offrant des services de la racine de confiance, ce procédé étant mis en œuvre par une entité de vérification et comportant :
- une étape d'établissement d'un premier canal sécurisé entre l'entité de vérification et l'hyperviseur ;
- une étape de réception de données d'attestation de l'hyperviseur dans le premier canal sécurisé ;
- une étape d'envoi, à l'hyperviseur, dans le premier canal sécurisé, d'au moins une donnée cryptographique destinée à la racine de confiance ;
- une étape d'établissement d'un deuxième canal sécurisé entre cette entité de vérification et chacune des machines virtuelles, des primitives de la racine de confiance appliquées à la donnée cryptographique étant nécessaires pour l'établissement de ce deuxième canal sécurisé ;
- une étape de réception de données d'attestations de chaque machine virtuelle dans le deuxième canal sécurisé établi pour cette machine virtuelle, ces données d'attestation étant obtenues par la machine virtuelle en utilisant des services de la racine de confiance virtualisée associée à ladite machine virtuelle.

Corrélativement l'invention vise aussi une entité de vérification configurée pour demander des attestations à une plateforme informatique virtualisée comportant une racine de confiance, un hyperviseur et au moins une machine virtuelle, l'hyperviseur mettant en œuvre une racine de confiance virtualisée par machine virtuelle et offrant des services de la racine de confiance, cette entité de vérification comportant :
- un module d'établissement d'un premier canal sécurisé entre l'entité de vérification et l'hyperviseur ;
- un module de communication configuré pour :
   - recevoir des données d'attestation de l'hyperviseur dans le premier canal sécurisé ;
   - envoyer au moins une donnée cryptographique à l'hyperviseur dans le premier canal sécurisé, cette donnée cryptographique étant destinée à la racine de confiance ; et
- un module d'établissement d'un deuxième canal sécurisé entre l'entité de vérification et chacune des machines virtuelle, des primitives de la racine de confiance appliquées à la donnée cryptographique étant nécessaires pour l'établissement de ce deuxième canal sécurisé ;
- un module de communication configuré pour recevoir des données d'attestation de chaque machine virtuelle dans le deuxième canal sécurisé établi pour cette machine virtuelle, ces données d'attestation étant obtenues par la machine virtuelle en utilisant des services de la racine de confiance virtualisée associée à la machine virtuelle.

L'invention vise aussi un programme d'ordinateur, sur un support d'informations, ce programme comportant des instructions adaptées à la mise en œuvre des étapes du procédé de demande d'attestations selon l'invention.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Ainsi, et d'une façon générale, l'invention propose, pour apporter la preuve de la liaison entre les données d'attestation des différentes couches d'établir des canaux sécurisés (deuxièmes canaux au sens de l'invention) entre chaque machine virtuelle et l'entité de vérification, un tel canal sécurisé étant établi en utilisant des primitives de la racine de confiance de la plateforme appliquées à une donnée cryptographique envoyée par l'entité de vérification dans le premier canal sécurisé établi avec l'hyperviseur.

Par conséquent, seules les couches en mesure d'utiliser les services de la racine de confiance (directement pour l'hyperviseur ou indirectement pour les machines virtuelles via les racines de confiance virtualisées) peuvent être à l'origine de ces canaux sécurisés.

L'invention apporte ainsi la preuve d'une liaison vérifiable et explicite entre la couche matérielle qui héberge la racine de confiance, l'hyperviseur, et les machines virtuelles de la plateforme informatique virtualisée.

Dans un mode de réalisation, l'entité de vérification produit un rapport d'attestation approfondie de la plateforme.

Dans le mode de réalisation décrit ici, ce rapport est positif si les canaux sécurisés établis entre ladite machine virtuelle et l'entité de vérification ont pu être établis. Ce rapport comporte :
- les données d'attestation de l'hyperviseur ; et
- les données d'attestation de chaque machine virtuelle.

La donnée cryptographique envoyée par l'entité de vérification à l'hyperviseur dans le premier canal sécurisé et utilisée par la racine de confiance pour établir les canaux sécurisés entre les machines virtuelles et l'entité de vérification peut être d'une nature quelconque.

Dans un mode particulier de réalisation de l'invention, l'entité de vérification comporte un serveur, l'hyperviseur comporte un client, ce client et ce serveur étant configurés pour établir entre eux le premier canal sécurisé dans le cadre d'une première session conforme au protocole TLS. Ce premier canal sécurisé est utilisé :
- par l'hyperviseur pour envoyer ses dites données d'attestation à l'entité de vérification ; et par
- l'entité de vérification pour envoyer la donnée cryptographique à l'hyperviseur.

Le protocole TLS peut être utilisé pour établir le premier canal sécurisé même si les machines virtuelles et l'entité de vérification utilisent ensuite un autre protocole.

Dans un mode particulier de réalisation le protocole TLS est également utilisé pour établir les deuxièmes canaux sécurisés. Plus précisément :
- les données cryptographiques envoyées par l'entité de vérification dans le premier canal sécurisé TLS comportent, associés à chaque machine virtuelle, un ticket et une variable aléatoire à usage unique ;
- la racine de confiance est configurée pour calculer, pour chaque machine virtuelle, une clé pré-partagée en utilisant la variable aléatoire à usage unique associée à cette machine virtuelle ;
- la clé pré-partagée est utilisée par la machine virtuelle pour demander l'établissement d'une deuxième session avec l'entité de vérification, cette deuxième session constituant une reprise de la première session conformément au protocole TLS ;
- le deuxième canal sécurisé utilisé par une machine virtuelle pour envoyer ses données d'attestation à l'entité de vérification étant établi dans le cadre de ladite deuxième session.

L'utilisation du protocole TLS permet avantageusement d'établir les deuxièmes canaux rapidement.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 déjà décrite représente l'architecture d'une plateforme informatique virtualisée conforme à l'état de la technique ;
- la figure 2A déjà décrite illustre le mécanisme d'attestation approfondie à canal unique de l'état de la technique ;
- la figure 2B déjà décrite illustre le mécanisme d'attestation approfondie multicanal de l'état de la technique ;
- la figure 3 représente, sous forme d'organigramme, les principales étapes d'un procédé d'attestation approfondie conforme à l'invention ;
- la figure 4 illustre des concepts connus du protocole TLS utiles à la compréhension d'un mode particulier de réalisation de l'invention ;
- la figure 5 illustre un mode particulier de réalisation de l'invention dans lequel l'entité de vérification et la plateforme informatique virtualisée communiquent conformément au protocole TLS ; et
- la figure 6 représente une entité dé vérification conforme à un mode particulier de réalisation de l'invention.

### Description des modes de réalisation

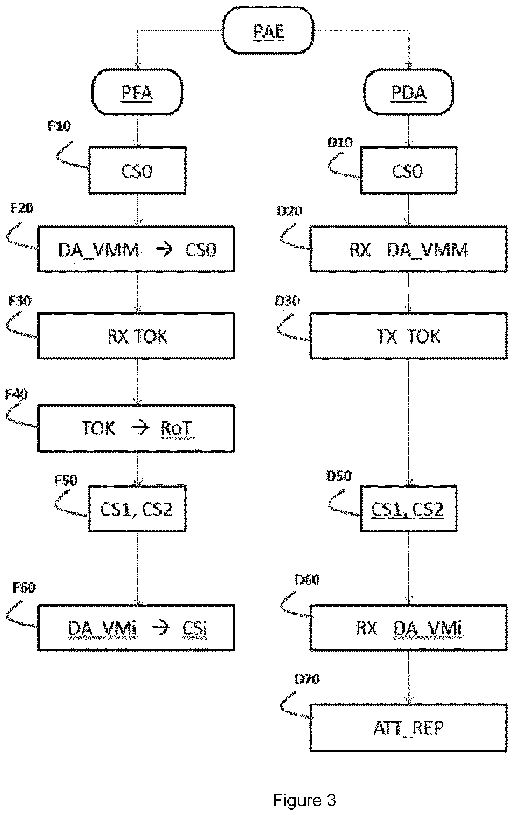

La figure 3 représente sous forme d'organigramme les principales étapes d'un procédé d'attestation approfondie PAE d'une plateforme informatique virtualisée PIV conforme à l'invention.

Ce procédé est conforme à un mode particulier de réalisation de l'invention.

Il est mis en œuvre par la plateforme informatique PIV virtualisée conforme à l'invention et par une entité de vérification EV conforme à l'invention.

Plus précisément :
- la plateforme informatique virtualisée PIV met en œuvre les étapes F10 à F60 d'un procédé PFA de fourniture d'attestations conforme à l'invention ; et
- l'entité de vérification EV met en œuvre les étapes D10 à D60 d'un procédé PDA de demande d'attestations conforme à l'invention.

Dans ce mode de réalisation, l'hyperviseur VMM de la plateforme PIV et l'entité de vérification établissent un premier canal sécurisé CS0. L'établissement de ce premier canal CS0 correspond à une étape D10 du procédé de demande d'attestation PDA et à une étape F10 du procédé de fourniture d'attestations PFA.

Au cours d'une étape F20 du procédé de fourniture d'attestation, l'hyperviseur VMM envoie, dans le premier canal sécurisé CS0, à destination de l'entité de vérification VM, des données d'attestation de cet hyperviseur. Ces données sont obtenues par l'hyperviseur en utilisant des services de ladite racine de confiance RoT de la couche matérielle. Elles sont reçues par l'entité de vérification EV au cours d'une phase D20 du procédé de demande d'attestations.

Au cours d'une étape D30, l'entité de vérification EV envoie, à l'hyperviseur VMM, dans le premier canal sécurisé CS0, au moins une donnée cryptographique TOK destinée à la racine de confiance RoT de la plateforme PIV. Cette donnée cryptographique TOK est reçue par l'hyperviseur VMM au cours d'une étape F30.

L'hyperviseur VMM mémorise la donnée cryptographique TOK dans ladite racine de confiance RoT au cours d'une étape F40.

Ensuite, chaque machine virtuelle de la plateforme PIV établit un canal sécurisé avec l'entité de vérification EV. Cet établissement correspond à une étape D50 du procédé de demande d'attestation PDA et à une étape F50 du procédé de fourniture d'attestations PFA.

Conformément à l'invention, des primitives de la racine de confiance RoT appliquées à la donnée cryptographique TOK sont nécessaires pour l'établissement de ce deuxième canal sécurisé.

Au cours d'une étape F60, chaque machine virtuelle envoie ses propres données d'attestation à l'entité de vérification EV dans le canal sécurisé établi pour cette machine virtuelle.

Ces données d'attestations sont reçues par l'entité de vérification EV au cours d'une étape D60.

Conformément à l'invention, les canaux sécurisés établis entre chacune des machines virtuelles et l'entité de vérification sont établis en utilisant des primitives de la racine de confiance de la plateforme appliquées à la donnée cryptographique envoyée par l'entité de vérification dans le premier canal sécurisé établi avec l'hyperviseur VMM.

Par conséquent, seules les couches en mesure d'utiliser les services de la racine de confiance (directement pour l'hyperviseur VMM ou indirectement pour les machines virtuelles VM) peuvent être à l'origine de ces canaux sécurisés.

L'invention apporte ainsi la preuve d'une liaison vérifiable et explicite entre la couche matérielle qui héberge la racine de confiance RoT, l'hyperviseur VMM, et les machines virtuelles de la plateforme informatique virtualisée PIV.

Dans le mode de réalisation décrit ici, l'entité de vérification EV produit un rapport d'attestation approfondie de la plateforme PIV au cours d'une étape D70.

Dans le mode de réalisation décrit ici, ce rapport est positif si les canaux sécurisés établis entre chaque machine virtuelle et l'entité de vérification EV ont pu être établis. Ce rapport comporte :
- les données d'attestation de l'hyperviseur ; et
- les données d'attestation de chaque machine virtuelle.

Dans un mode de réalisation de l'invention, l'entité de vérification EV et la plateforme informatique virtualisée PIV communiquent selon le protocole TLS dont les concepts importants pour la compréhension de ce mode de réalisation de l'invention vont maintenant être décrits en référence à la figure 4.

Cette figure illustre plus précisément des opérations effectuées par un client CLT_TLS et un serveur SRV_TLS dans la mise en œuvre du protocole TLS.

Le protocole TLS comprend un protocole de négociation HS, ou poignée de mains (en anglais « handshake protocol ») qui authentifie les parties communicantes, négocie les modes et les paramètres cryptographiques permettant le calcul, par le client CLT_TLS et par le serveur SRV_TLS, au cours d'une étape T10, d'un secret maître partagé (en anglais master secret) MS.

Ce secret maître partagé MS est utilisé par les parties pour dériver leurs clés cryptographiques, telles que des clés de chiffrement de canaux.

Au cours d'une étape T20, le serveur SRV_TLS tire aléatoirement un nonce NONCEi, à savoir un nombre aléatoire ou pseudo-aléatoire à usage unique pour chaque machine virtuelle VMi. Le serveur utilise le secret maître partagé MS pour calculer des tickets TICKi, en utilisant ces nonces NONCEi. Le serveur SRV_TLS envoie au client CLT_TLS les tickets TICKi associés à leurs nonces NONCEi.

Plus précisément, le serveur SRV_TLS calcule autant de tickets TICKi qu'il envisage de reprises de sessions (« session resumption » en anglais) à l'initiative du client CLT_TLS.

Au cours d'une étape T30, le serveur SRV_TLS et le client CLT_TLS calculent, pour chaque ticket TICKi, une clé pré-partagée PSKi (en anglais pre-shared key) obtenue en utilisant le secret maître partagé MS et le nonce NONCEi associé à ce ticket.

Ces tickets TICKi peuvent être utilisés par le client CLT_TLS pour démarrer rapidement de futures négociations.

Plus précisément, lorsque le client CLT_TLS souhaite démarrer une nouvelle session basée sur une session précédente (en anglais « resume »), le dispositif client envoie dans son premier message au serveur, au cours d'une étape T40, un ticket TICKi.

Au cours d'une étape T45, le client CLT_TLS et le serveur SRV_TLS calculent un nouveau secret partagé MSi' en utilisant leurs clés pré-partagées PSKi respectives.

Ce nouveau secret partagé MSi' est utilisé pour monter un nouveau canal sécurisé dans le cadre de la nouvelle session demandée par la machine virtuelle VMi avec l'entité de vérification EV.

Ce mécanisme du protocole TLS permet avantageusement de simplifier l'échange de clés, de paramètres, et l'authentification du serveur de la nouvelle session (étape générale T50). Si les deux parties acceptent cette nouvelle session, autrement dit si les nouveaux secrets déterminés par le client CLT_TLS et le serveur SRV_TLS correspondent, cela implique que ce sont ces mêmes parties CLT_TLS et SRV_TLS qui ont participé à la phase de négociation initiale HS.

Pour plus de renseignements sur le protocole TLS, l'homme du métier peut se reporter à la référence [TLS].

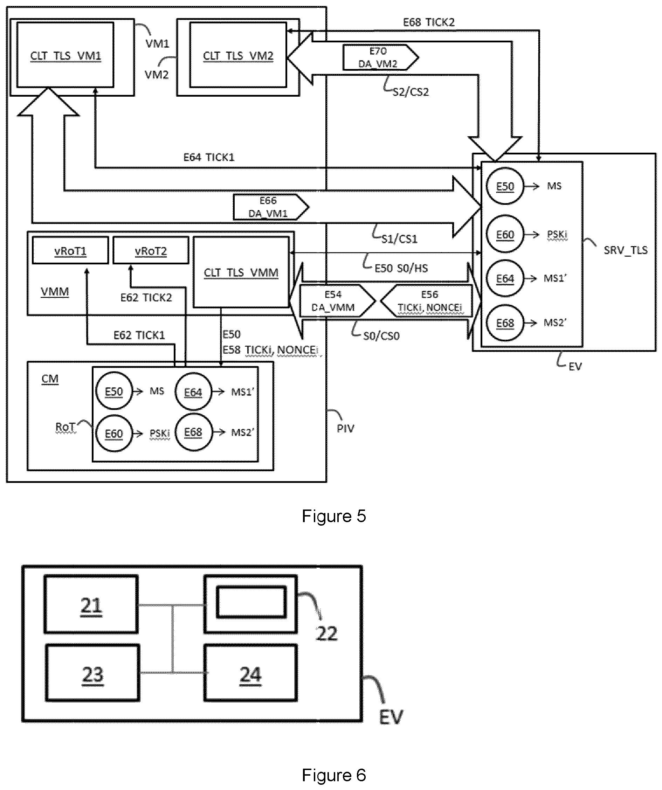

La figure 5 illustre le mode de réalisation de l'invention dans lequel l'entité de vérification EV conforme à l'invention et la plateforme informatique virtualisée PIV conforme à l'invention communiquent selon le protocole TLS.

Dans ce mode de réalisation :
- l'entité de vérification EV comporte un serveur SRV_TLS ;
- l'hyperviseur VMM comporte un client CLT_TLS_VMM ; et
- chaque machine virtuelle VMi comporte un client CLT_TLS_VMi.

Au cours d'une étape préliminaire non représentée, l'entité de vérification EV envoie un message à la plateforme informatique virtualisée pour que le client CLT_TLS_VMM de l'hyperviseur VMM effectue une demande d'établissement de session auprès du serveur SRV_TLS de l'entité de vérification EV.

Au cours d'une étape générale E50, le serveur SRV_TLS de l'entité de vérification EV et le client CLT_TLS_VMM de l'hyperviseur VMM effectuent, dans le cadre d'une première session S0, une phase de négociation conforme au protocole TLS (en anglais handshake) similaire à la phase HS décrite précédemment en référence à la figure 4.

On rappelle que cette phase de négociation HS comporte notamment le calcul par le client CLT_TLS_VMM de l'hyperviseur VMM d'une part et par le serveur SRV_TLS de l'entité de vérification EV d'autre part d'un secret maître partagé MS.

Pour calculer ce secret maître partagé MS, le client CLT_TLS_VMM de l'hyperviseur VMM invoque des primitives de la racine de confiance RoT de la plateforme PIV. Ces primitives calculent le secret maître partagé MS et l'enregistrent de façon sécurisée dans la racine de confiance RoT. Autrement dit, le client CLT_TLS_VMM de l'hyperviseur délègue le calcul du secret maître partagé MS à la racine de confiance RoT.

La phase de négociation permet d'établir, pour la durée de la première session S0, un canal sécurisé CS0 entre l'entité de vérification EV et l'hyperviseur VMM.

Ce canal sécurisé CS0 est utilisé par l'hyperviseur VMM pour communiquer (étape E54) ses données d'attestation DA_VMM à l'entité de vérification EV, ces données étant obtenues par l'hyperviseur en utilisant les services de la racine de confiance RoT.

Toujours au cours de la même session S0, le serveur SRV_TLS de l'entité de vérification EV envoie (étape E56) au client CLT_TLS_VMM autant de tickets TICKi qu'il existe de machines virtuelles VMi dans la plateforme informatique virtualisée PIV, chaque ticket étant associé à un nonce NONCEi. Ce nombre de machines virtuelles a pu être communiqué précédemment par l'hyperviseur VMM à l'entité de vérification EV. En effet, le serveur SRV_TLS s'attend à ce que chacune des machines virtuelles VMi initie une session propre avec lui-même pour lui communiquer ses données d'attestation DA_VMi.

Au cours d'une étape E58, le client CLT_TLS_VMM de l'hyperviseur VMM communique ces couples tickets|nonce TICKi|NONCEi à la racine de confiance RoT de la plateforme PIV.

Au cours d'une étape E60, le serveur SRV_TLS et la racine de confiance RoT calculent, pour chaque ticket TICKi, une clé pré-partagée PSKi à partir du secret maître partagé MS et du nonce NONCEi associé à ce ticket.

Au cours d'une étape E62, le module de confiance virtualisé vRoTi associé à chaque machine virtuelle VMi obtient un ticket TICKi.

Une fois que les tickets et nonces TICKi|NONCEi ont été envoyés par l'entité de vérification EV (étape E56) au client CLT_TLS_VMM de l'hyperviseur VMM, la session S0 se termine.

Au cours d'une étape E64, le client CLT_TLS_VM1 de la machine virtuelle VM1 demande à démarrer une nouvelle session S1 avec le serveur SRV_TLS de l'entité de vérification EV en lui envoyant le ticket TICK1. Un nouveau secret MS1' est calculé par la racine de confiance RoT et par le serveur SRV_TLS à partir de leurs valeurs respectives de la clé pré-partagée PSK1.

Cette nouvelle session s'établit si les nouveaux secrets MS1' sont identiques et se déroule conformément aux étapes T45 / T50 décrites précédemment en référence à la figure 4.

Un canal sécurisé CS1 est établi, pour la durée de cette session S1, entre l'entité de vérification EV et la machine virtuelle VM1.

Ce canal sécurisé CS1 est utilisé par la machine virtuelle VM1 pour communiquer (étape E66) ses données d'attestation DA_VM1 à l'entité de vérification EV, ces données étant obtenues par la machine virtuelle VM1 en utilisant les services de la racine de confiance virtualisée vRoT1.

Une fois que les données d'attestation DA_VM1 ont été envoyées à l'entité de vérification EV, la session S1 se termine.

Au cours d'une étape E68, le client CLT_TLS_VM2 de la machine virtuelle VM2 demande à démarrer une nouvelle session S2 avec le serveur SRV_TLS de l'entité de vérification EV en lui envoyant le ticket TICK2. Un nouveau secret MS2' est calculé par la racine de confiance RoT et par le serveur SRV_TLS à partir de leurs valeurs respectives de la clé pré-partagée PSK2.

Un canal sécurisé CS2 est établi, pour la durée de cette session S2, entre l'entité de vérification EV et la machine virtuelle VM2.

Ce canal sécurisé CS2 est utilisé par la machine virtuelle VM2 pour communiquer (étape E70) ses données d'attestation DA_VM2 à l'entité de vérification EV, ces données étant obtenues par la machine virtuelle VM2 en utilisant les services de la racine de confiance virtualisée vRoT2.

Une fois que les données d'attestation DA_VM2 ont été envoyées à l'entité de vérification EV, la session S2 se termine.

L'entité de vérification EV a ainsi reçu :
- les données d'attestation DA_VMM de l'hyperviseur ;
- les données d'attestation DA_VMi de chacune des machines virtuelles VMi.

Les canaux sécurisés CS1 et CS2 ont été établis sur la base des tickets TICK1 et TICK2 reçus de l'entité de vérification EV et des clés pré-partagées PSK1, PSK2 calculées par la racine de confiance RoT sur la base du secret maître partagé MS et des nonces NONCE1, NONCE2. De plus, les sessions S1 et S2 sont des sessions dérivées de la première session S0 de la phase de négociation HS.

Par conséquent, seules les couches en mesure d'utiliser les services de la racine de confiance RoT (directement pour l'hyperviseur VMM ou indirectement pour les machines virtuelles VMi via les racines de confiance virtualisées vRoTi) peuvent être à l'origine de ces sessions liées S1 et S2.

L'invention apporte ainsi la preuve d'une liaison vérifiable et explicite entre la couche matérielle CM qui héberge la racine de confiance RoT, l'hyperviseur VMM, et les machines virtuelles VM1, VM2 de la plateforme informatique virtualisée PIV.

La figure 6 représente une entité de vérification EV conforme à l'invention. Dans le mode de réalisation décrit ici, cette entité de vérification EV a l'architecture matérielle d'un ordinateur. Elle comporte un processeur 21, une mémoire morte de type ROM 22, une mémoire vive de type RAM 23 et des moyens de communication 24.

La mémoire morte de type ROM 22 constitue un support d'enregistrement au sens de l'invention. Elle comporte un programme d'ordinateur conforme à l'invention, ce programme comportant des instructions aptes à mettre en œuvre un procédé de demandes d'attestations conforme à l'invention et dont les principales étapes ont décrites en référence à la figure 3.

Lorsque le processeur 21 exécute le programme d'ordinateur, l'entité de vérification EV est apte à établir, en utilisant des moyens de communication 24 un premier canal sécurisé avec l'hyperviseur VMM d'une plateforme informatique virtualisée.

Dans un mode de réalisation de l'invention, la mémoire morte 22 comporte une pile de protocole permettant d'installer un serveur SRV_TLS dans l'entité de vérification EV, ce serveur SRV_TLS étant apte à établir un canal de communication sécurisé avec un client CLT_TLS installé dans l'hyperviseur VMM, conformément au protocole TLS.

Les moyens de communication 24 sont des moyens matériels et logiciels. Ils sont aptes à recevoir des données d'attestation DA_VMM de l'hyperviseur dans ce premier canal sécurisé.

Lorsque le processeur 21 est configuré pour envoyer au moins une donnée cryptographique à l'hyperviseur VMM dans le premier canal sécurisé en utilisant les moyens de communication 24. En particulier, dans le mode de réalisation dans lequel l'entité de vérification EV et la plateforme PIV utilisent le protocole TLS, le processeur 21 est configuré pour calculer les tickets TICKi et les envoyer dans le canal de communication sécurisé à l'hyperviseur VMM.

Lorsque le processeur 21 exécute le programme d'ordinateur, l'entité de vérification EV est également apte à établir, en utilisant des moyens de communication 24 un canal sécurisé avec chacune des machines virtuelles de la plateforme PIV.

L'entité de vérification EV reçoit les données d'attestation DA_VMi de ces machines virtuelles, dans ces canaux sécurisés, via les moyens de communication 24.

La plateforme informatique virtualisée PIV peut avoir l'architecture matérielle d'un ordinateur conventionnel. L'invention ne présage pas du type d'hyperviseur.

### Références :

[TCG] : TCG Virtual Platform WG : Virtualized Trusted Platftorm Architecture Specification. Specification Version 1.0. Revision 0.26. September 27, 2011.
[NFV] : Network Functions Virtualization (NFV) ; Trust ; Report on Attestation Techniologies and Practices for Secure Deployments. ETSI GR NFV-SEC 007 v1.1.1 (2017-10).
[PRA] : G. Coker, J. Guttman, P. Loscocco, A. Herzog, J. Milien, B. O'Hanlon, J. Ramsdell, A. Segall, J. Sheehy, B. Sniffen « Principles of Remote Attestation. Int. J. Inf. Secur. 1, 2 (June 2011), 63-81.
DOI=http://dx.doi.org/10.1007/s10207-011-0124-7.
   [TLS] : E. Rescorla, « The Transport Security Layer (TLS) Protocol Version 1.3 », RFC 8446, DOI 10.17487/RFC8446, August 2018.

## Revendications

1. Procédé (PFA) de fourniture d'attestations mis en œuvre par une plateforme informatique virtualisée (PIV) comportant une racine de confiance (RoT), un hyperviseur (VMM) et au moins une machine virtuelle (VM1, VM2), l'hyperviseur (VMM) mettant en œuvre une racine de confiance virtualisée (vRoT1, vRoT2) par machine virtuelle (VM1, VM2) et offrant des services de la racine de confiance (RoT), ce procédé comportant :
- une étape (F10) d'établissement d'un premier canal sécurisé (CSO) entre ledit hyperviseur (VMM) et une entité de vérification (EV) ;
- une étape (F20) d'envoi de données d'attestation (DA_VMM) de cet hyperviseur dans ledit premier canal sécurisé (CSO) à destination de l'entité de vérification (EV), lesdites données d'attestation étant obtenues en utilisant des services de ladite racine de confiance (RoT) ;
- une étape de (F30) réception, par ledit hyperviseur (VMM), dans ledit premier canal sécurisé (CS0), en provenance de ladite entité de vérification (EV), d'au moins une donnée cryptographique (TOK) destinée à ladite racine de confiance (RoT) pour établir (F50) un deuxième canal sécurisé (CS1, CS2) entre chaque dite machine virtuelle (VM1, VM2) et ladite entité de vérification (EV) ;
- une étape (F50) d'établissement du deuxième canal sécurisé (CS1, CS2) entre chaque dite machine virtuelle (VM1, VM2) et ladite entité de vérification (EV), des primitives de la racine de confiance (RoT) appliquées à une dite donnée cryptographique (TOK) étant nécessaires pour l'établissement de ce deuxième canal sécurisé (CS1, CS2) ;
- une étape (F60) d'envoi de données d'attestation (DA_VM1, DA_VM2) de chaque dite machine virtuelle (VM1, VM2) dans le deuxième canal sécurisé (CS1, CS2) établi pour ladite machine virtuelle (VM1, VM2), lesdites données d'attestations (DA_VM1, DA_VM2) étant obtenues par ladite machine virtuelle (VM1, VM2) en utilisant des services de la racine de confiance virtualisée (vRoT1, vRoT2) associée à ladite machine virtuelle (VM1, VM2).

2. Procédé (PDA) de demande d'attestations d'une plateforme informatique virtualisée (PIV) comportant une racine de confiance (RoT), un hyperviseur (VMM) et au moins une machine virtuelle (VM1, VM2), l'hyperviseur (VMM) mettant en œuvre une racine de confiance virtualisée (vRoT1, vRoT2) par machine virtuelle (VM1, VM2) et offrant des services de la racine de confiance (RoT), une dite machine virtuelle (VM1, VM2) obtenant des données d'attestation (DA_VM1, DA_VM2) en utilisant des services de la racine de confiance virtualisée (vRoT1, vRoT2) associée à cette machine virtuelle (VM1, VM2), ce procédé étant mis en œuvre par une entité de vérification (EV) et comportant :
- une étape (D10) d'établissement d'un premier canal sécurisé (CSO) entre ladite entité de vérification (EV) et ledit hyperviseur (VMM) ;
- une étape (D20) de réception de données d'attestation (DA_VMM) dudit hyperviseur dans le premier canal sécurisé (CS0), les données d'attestation (DA_VMM) étant obtenues en utilisant des services de ladite racine de confiance (RoT) ;
- une étape (D30) d'envoi, audit hyperviseur (VMM), dans ledit premier canal sécurisé (CS0), d'au moins une donnée cryptographique (TOK) destinée à la racine de confiance (RoT) pour établir (D50) un deuxième canal sécurisé (CS1, CS2) entre ladite entité de vérification (EV) et chaque dite machine virtuelle (VM1, VM2) ;
- une étape (D50) d'établissement du deuxième canal sécurisé (CS1, CS2) entre ladite entité de vérification (EV) et chaque dite machine virtuelle (VM1, VM2), des primitives de la racine de confiance (RoT) appliquées à ladite au moins une donnée cryptographique (TOK) étant nécessaires pour l'établissement de ce deuxième canal sécurisé (CS1, CS2) ;
- une étape (D60) de réception, de chaque machine virtuelle (VM1, VM2) dans le deuxième canal sécurisé (CS1, CS2) établi pour ladite machine virtuelle (VM1, VM2), de données d'attestation (DA_VM1, DA_VM2) de cette machine virtuelle (VM1, VM2).

3. Procédé (PDA) de demande d'attestations selon la revendication 2 comportant en outre une étape (D70) de production d'un rapport (ATT_REP) d'attestation approfondie de ladite plateforme (PIV), ce rapport étant positif si ledit deuxième canal sécurisé (CS1, CS2) a été établi pour ladite machine virtuelle (VM1, VM2), ledit rapport (ATT_REP) comportant :
- les données (DA_VMM) d'attestation de l'hyperviseur ; et
- les données (DA_VMi) d'attestation de chaque machine virtuelle (VMi).

4. Procédé (PDA, PFA) selon l'une quelconque des revendications 1 à 3 dans lequel :
- ladite entité de vérification (EV) comporte un serveur (TLS SRV_TLS) ;
- ledit hyperviseur (VMM) comporte un client (TLS CLT_TLS_VMM),
ledit client et ledit serveur étant configurés pour établir entre eux ledit premier canal sécurisé (CSO) dans le cadre d'une première session (S0) conforme au protocole TLS,
ledit premier canal sécurisé étant utilisé :
- par ledit hyperviseur pour envoyer (F20) ses dites données d'attestation (DA_VMM) à l'entité de vérification (EV) ; et
- par ladite entité de vérification (EV) pour envoyer (D30) ladite au moins une donnée cryptographique (TOK) au dit hyperviseur (VMM).

5. Procédé (PDA, PFA) selon la revendication 4, dans lequel :
- ladite au moins une donnée cryptographique comporte, associés à chaque dite machine virtuelle (VM1, VM2), un ticket (TICKi) et une variable aléatoire à usage unique (NONCEi) ;
- ladite racine de confiance (RoT) étant configurée pour calculer, pour chaque machine virtuelle (VM1), une clé pré-partagée (PSK1) en utilisant la variable aléatoire à usage unique (NONCE1) associée à cette machine virtuelle ;
- ladite clé partagée (PSK1) étant utilisée par ladite machine virtuelle pour demander (F50) l'établissement d'une deuxième session (S1) avec ladite entité de vérification (EV), ladite deuxième session (S1) constituant une reprise de ladite première session (S0) conformément au protocole TLS ;
- ledit deuxième canal sécurisé (CS1) utilisé par ladite machine virtuelle (VM1) pour envoyer (F60) ses données d'attestation (DA_VM1) à ladite entité de vérification étant établi (F50) dans le cadre de ladite deuxième session (S1).

6. Plateforme informatique virtualisée (PIV) comportant une racine de confiance (RoT), un hyperviseur (VMM) et au moins une machine virtuelle (VM1, VM2), l'hyperviseur (VMM) mettant en œuvre une racine de confiance virtualisée (vRoT1, vRoT2) par machine virtuelle (VM1, VM2) et offrant des services de la racine de confiance (RoT), dans laquelle :
- ledit hyperviseur (VMM) est configuré pour :
- établir un premier canal sécurisé (CSO) avec une entité de vérification (EV)
- obtenir des données d'attestation (DA_VMM) de cet hyperviseur en utilisant des services de ladite racine de confiance (RoT) ;
- envoyer lesdites données d'attestation (DA_VMM) de cet hyperviseur dans ledit premier canal sécurisé (CSO) à destination de l'entité de vérification (EV) ;
- recevoir, en provenance de ladite entité de vérification (EV) dans ledit premier canal sécurisé (CS0), au moins une donnée cryptographique (TOK) destinée à la racine de confiance (RoT) pour établir un deuxième canal sécurisé (CS1, CS2) entre chaque dite machine virtuelle (VM1, VM2) et ladite entité de vérification (EV) ;
- chaque dite machine virtuelle (VM1) est configurée pour :
- établir le deuxième canal sécurisé (CS1) entre cette machine virtuelle et ladite entité de vérification (EV), des primitives de la racine de confiance (RoT) appliquées à une dite donnée cryptographique (TOK) étant nécessaires pour l'établissement de ce deuxième canal sécurisé (CS1) ;
- envoyer des données d'attestation (DA_VM1) de ladite machine virtuelle (VM1) dans le deuxième canal sécurisé (CS1) établi pour cette machine virtuelle (VM1), ces données d'attestation (DA_VM1) étant obtenues par ladite machine virtuelle (VM1) en utilisant des services d'une racine de confiance virtualisée (vRoT1) associée à ladite machine virtuelle (VM1).

7. Entité de vérification (EV) configurée pour demander des attestations à une plateforme informatique virtualisée (PIV) comportant une racine de confiance (RoT), un hyperviseur (VMM) et au moins une machine virtuelle (VM1, VM2), l'hyperviseur (VMM) mettant en œuvre une racine de confiance virtualisée (vRoT1, vRoT2) par machine virtuelle (VM1, VM2) et offrant des services de la racine de confiance (RoT), une dite machine virtuelle (VM1, VM2) obtenant des données d'attestation (DA_VM1, DA_VM2) en utilisant des services de la racine de confiance virtualisée (vRoT1, vRoT2) associée à cette machine virtuelle (VM1, VM2), ladite entité de vérification (EV) comportant :
- un module d'établissement d'un premier canal sécurisé (CSO) entre ladite entité de vérification (EV) et ledit hyperviseur (VMM) ;
- un module de communication configuré pour :
- recevoir des données d'attestation (DA_VMM) dudit hyperviseur dans ledit premier canal sécurisé (CS0), les données d'attestation (DA_VMM) étant obtenues en utilisant des services de ladite racine de confiance (RoT) ;
- envoyer au moins une donnée cryptographique (TOK) audit hyperviseur (VMM) dans ledit premier canal sécurisé (CS0), ladite au moins une donnée cryptographique (TOK) étant destinée à la racine de confiance (RoT) pour établir un deuxième canal sécurisé (CS1, CS2) entre ladite entité de vérification (EV) et chaque dite machine virtuelle (VM1, VM2) ;
- un module d'établissement du deuxième canal sécurisé (CS1, CS2) entre ladite entité de vérification (EV) et chaque dite machine virtuelle (VM1, VM2), des primitives de la racine de confiance (RoT) appliquées à ladite au moins une donnée cryptographique (TOK) étant nécessaires pour l'établissement de ce deuxième canal sécurisé (CS1, CS2) ;
- un module de communication configuré pour recevoir, de chaque machine virtuelle (VM1,VM2) dans le deuxième canal sécurisé (CS1, CS2) établi pour ladite machine virtuelle (VM1, VM2), des données d'attestation (DA_VM1, DA_VM2) de cette machine virtuelle (VM1, VM2).

8. Ensemble de programmes d'ordinateurs comportant :
- un programme d'ordinateur (CLT_TLS_VMM) sur un support d'information, ledit programme étant susceptible d'être mis en œuvre par un hyperviseur (VMM) d'une plateforme informatique virtualisée (PIV), la plateforme informatique virtualisée (PIV) comportant une racine de confiance (RoT) et au moins une machine virtuelle (VM1, VM2), ce programme comportant des instructions configurées pour :
- établir un premier canal sécurisé (CSO) entre ledit hyperviseur (VMM) et une entité de vérification (EV) ;
- envoyer des données d'attestation (DA_VMM) de cet hyperviseur dans ledit premier canal sécurisé (CSO) à destination de l'entité de vérification (EV), lesdites données d'attestation étant obtenues en utilisant des services de la racine de confiance (RoT) de ladite plateforme (PIV) ;
- recevoir par ledit hyperviseur au moins une donnée cryptographique (TOK) en provenance de ladite entité de vérification (EV) dans ledit premier canal sécurisé (CS0), cette donnée cryptographique (TOK) étant destinée à la racine de confiance (RoT) pour établir un deuxième canal sécurisé (CS1, CS2) entre chaque dite machine virtuelle (VM1, VM2) et ladite entité de vérification (EV) ;
- un programme d'ordinateur sur un support d'information, une instance (CLT_TLS_VM1, CLT_TLS_VM2) de ce programme étant susceptible d'être mise en œuvre par chaque dite machine virtuelle (VM1, VM2) de ladite plateforme informatique virtualisée (PIV), cette instance de programme comportant des instructions configurées pour :
- établir le deuxième canal sécurisé (CS1) entre ladite machine virtuelle (VM1) et ladite entité de vérification (EV), des primitives de la racine de confiance (RoT) appliquées à une dite donnée cryptographique étant nécessaires pour l'établissement de ce deuxième canal sécurisé (CS1) ;
- envoyer des données d'attestation (DA_VM1) de ladite machine virtuelle (VM1) dans le deuxième canal sécurisé (CS1), lesdites données d'attestation étant obtenues par ladite machine virtuelle (VMi) en utilisant des services d'une racine de confiance virtualisée (vRoT1) dudit hyperviseur (VMM) associée à ladite machine virtuelle (VM1) et offrant des services de ladite racine de confiance (RoT).

9. Programme d'ordinateur sur un support d'information, ledit programme étant susceptible d'être mis en œuvre par un ordinateur, ce programme comportant des instructions adaptées à la mise en œuvre d'un procédé de demandes d'attestations (PDA) selon l'une quelconque des revendications 2 à 5.

10. Support d'enregistrement lisible par un ordinateur (PIV, EV) sur lequel est enregistré au moins :
- un programme d'ordinateur selon la revendication 9 ; ou
- un programme d'ordinateur d'un ensemble de programmes d'ordinateurs selon la revendication 8.

## Patentansprüche

1. Verfahren (PFA) zum Bereitstellen von Zertifikaten, das von einer virtualisierten Rechnerplattform (PIV) implementiert wird, die einen Root of Trust (RoT), einen Hypervisor (VMM) und mindestens eine virtuelle Maschine (VM1, VM2) umfasst, wobei der Hypervisor (VMM) einen virtualisierten Root of Trust (vRoT1, vRoT2) je virtuelle Maschine (VM1, VM2) implementiert und Dienste des Root of Trust (RoT) anbietet, wobei dieses Verfahren umfasst:
- einen Schritt (F10) des Einrichtens eines ersten sicheren Kanals (CSO) zwischen dem Hypervisor (VMM) und einer Verifizierungsentität (EV);
- einen Schritt (F20) des Sendens von Zertifizierungsdaten (DA_VMM) dieses Hypervisors in dem ersten sicheren Kanal (CSO) an die Verifizierungsentität (EV), wobei die Zertifizierungsdaten unter Verwendung von Diensten des Root of Trust (RoT) erhalten werden;
- einen Schritt (F30) des Empfangens, durch den Hypervisor (VMM), in dem ersten sicheren Kanal (CS0), von der Verifizierungsentität (EV), mindestens eines kryptographischen Datenelements (TOK), das für den Root of Trust (RoT) bestimmt ist, um einen zweiten sicheren Kanal (CS1, CS2) zwischen jeder virtuellen Maschine (VM1, VM2) und der Verifizierungsentität (EV) einzurichten (F50) ;
- einen Schritt (F50) des Einrichtens des zweiten sicheren Kanals (CS1, CS2) zwischen jeder virtuellen Maschine (VM1, VM2) und der Verifizierungsentität (EV), wobei Stammfunktionen des Root of Trust (RoT), die auf ein kryptographisches Datenelement (TOK) angewendet werden, zum Einrichten dieses zweiten sicheren Kanals (CS1, CS2) erforderlich sind;
- einen Schritt (F60) des Sendens von Zertifizierungsdaten (DA_VM1, DA_VM2) jeder virtuellen Maschine (VM1, VM2) in dem zweiten sicheren Kanal (CS1, CS2), der für die virtuelle Maschine (VM1, VM2) eingerichtet wurde, wobei die Zertifizierungsdaten (DA_VM1, DA_VM2) von der virtuellen Maschine (VM1, VM2) unter Verwendung von Diensten des virtualisierten Root of Trust (vRoT1, vRoT2) erhalten werden, welcher der virtuellen Maschine (VM1, VM2) zugeordnet ist.

2. Verfahren (PDA) zum Anfordern von Zertifikaten einer virtualisierten Rechnerplattform (PIV), die einen Root of Trust (RoT), einen Hypervisor (VMM) und mindestens eine virtuelle Maschine (VM1, VM2) umfasst, wobei der Hypervisor (VMM) einen virtualisierten Root of Trust (vRoT1, vRoT2) je virtuelle Maschine (VM1, VM2) implementiert und Dienste des Root of Trust (RoT) anbietet, wobei eine virtuelle Maschine (VM1, VM2) Zertifizierungsdaten (DA_VM1, DA_VM2) unter Verwendung von Diensten des virtualisierten Root of Trust (vRoT1, vRoT2) erhält, der dieser virtuellen Maschine (VM1, VM2) zugeordnet ist, wobei dieses Verfahren von einer Verifizierungsentität (EV) implementiert wird und umfasst:
- einen Schritt (D10) des Einrichtens eines ersten sicheren Kanals (CSO) zwischen der Verifizierungsentität (EV) und dem Hypervisor (VMM);
- einen Schritt (D20) des Empfangens von Zertifizierungsdaten (DA_VMM) des Hypervisors in dem ersten sicheren Kanal (CS0), wobei die Zertifizierungsdaten (DA_VMM) unter Verwendung von Diensten des Root of Trust (RoT) erhalten werden;
- einen Schritt (D30) des Sendens, an den Hypervisor (VMM), in dem ersten sicheren Kanal (CS0), mindestens eines kryptographischen Datenelements (TOK), das für den Root of Trust (RoT) bestimmt ist, um einen zweiten sicheren Kanal (CS1, CS2) zwischen der Verifizierungsentität (EV) und jeder virtuellen Maschine (VM1, VM2) einzurichten (D50);
- einen Schritt (D50) des Einrichtens des zweiten sicheren Kanals (CS1, CS2) zwischen der Verifizierungsentität (EV) und jeder virtuellen Maschine (VM1, VM2), wobei Stammfunktionen des Root of Trust (RoT), die auf das mindestens eine kryptographische Datenelement (TOK) angewendet werden, zum Einrichten dieses zweiten sicheren Kanals (CS1, CS2) erforderlich sind;
- einen Schritt (D60) des Empfangens, von jeder virtuellen Maschine (VM1, VM2) in dem zweiten sicheren Kanal (CS1, CS2), der für die virtuelle Maschine (VM1, VM2) eingerichtet wurde, von Zertifizierungsdaten (DA_VM1, DA_VM2) dieser virtuellen Maschine (VM1, VM2).

3. Verfahren (PDA) zum Anfordern von Zertifikaten nach Anspruch 2, umfassend ferner einen Schritt (D70) des Erzeugens eines Berichts (ATT_REP) über die vertiefte Zertifizierung der Plattform (PIV), wobei dieser Bericht positiv ist, wenn der zweite sichere Kanal (CS1, CS2) für die virtuelle Maschine (VM1, VM2) eingerichtet worden ist, der Bericht (ATT_REP) umfassend:
- die Zertifizierungsdaten (DA_VMM) des Hypervisors; und
- die Zertifizierungsdaten (DA_VMI) jeder virtuellen Maschine (VMi).

4. Verfahren (PDA, PFA) nach einem der Ansprüche 1 bis 3, wobei:
- die Verifizierungsentität (EV) einen Server (TLS SRV_TLS) umfasst;
- der Hypervisor (VMM) einen Client (TLS CLT_TLS_VMM) umfasst,
wobei der Client und der Server dazu ausgestaltet sind, zwischen sich den ersten sicheren Kanal (CSO) im Rahmen einer ersten Sitzung (S0) nach dem Protokoll TLS einzurichten,
wobei der erste sichere Kanal verwendet wird:
- durch den Hypervisor zum Senden (F20) seiner Zertifizierungsdaten (DA_VMM) an die Verifizierungsentität (EV); und
- durch die Verifizierungsentität (EV) zum Senden (D30) des mindestens einen kryptographischen Datenelements (TOK) an den Hypervisor (VMM).

5. Verfahren (PDA, PFA) nach Anspruch 4, wobei:
- das mindestens eine kryptographische Datenelement ein Ticket (TICKi) und eine Einmal-Zufallsvariable (NONCEi) umfasst, die jeder virtuellen Maschine (VM1, VM2) zugeordnet sind;
- wobei der Root of Trust (RoT) dazu ausgestaltet ist, für jede virtuelle Maschine (VM1) einen vorab geteilten Schlüssel (PSK1) unter Verwendung der Einmal-Zufallsvariable (NONCE1), die dieser virtuellen Maschine zugeordnet ist, zu berechnen;
- wobei der geteilte Schlüssel (PSK1) von der virtuellen Maschine verwendet wird, um das Einrichten einer zweiten Sitzung (S1) mit der Verifizierungsentität (EV) anzufordern (F50), wobei die zweite Sitzung (S1) eine Wiederaufnahme der ersten Sitzung (S0) nach dem Protokoll TLS darstellt;
- wobei der zweite sichere Kanal (CS1), der von der virtuellen Maschine (VM1) zum Senden (F60) ihrer Zertifizierungsdaten (DA_VM1) an die Verifizierungsentität verwendet wird, im Rahmen der zweiten Sitzung (S1) eingerichtet wird (F50).

6. Virtualisierte Rechnerplattform (PIV), die einen Root of Trust (RoT), einen Hypervisor (VMM) und mindestens eine virtuelle Maschine (VM1, VM2) umfasst, wobei der Hypervisor (VMM) einen virtualisierten Root of Trust (vRoT1, vRoT2) je virtuelle Maschine (VM1, VM2) implementiert und Dienste des Root of Trust (RoT) anbietet, wobei:
- der Hypervisor (VMM) dazu ausgestaltet ist:
- einen ersten sicheren Kanal (CSO) mit einer Verifizierungsentität (EV) einzurichten
- Zertifizierungsdaten (DA_VMM) dieses Hypervisors unter Verwendung von Diensten des Root of Trust (RoT) zu erhalten;
- die Zertifizierungsdaten (DA_VMM) dieses Hypervisors in dem ersten sicheren Kanal (CSO) an die Verifizierungsentität (EV) zu senden;
- von der Verifizierungsentität (EV) in dem ersten sicheren Kanal (CSO) mindestens ein kryptografisches Datenelement (TOK) zu empfangen, das für den Root of Trust (RoT) bestimmt ist, um einen zweiten sicheren Kanal (CS1, CS2) zwischen jeder virtuellen Maschine (VM1, VM2) und der Verifizierungsentität (EV) einzurichten;
- jede virtuelle Maschine (VM1) dazu ausgestaltet ist:
- den zweiten sicheren Kanal (CS1) zwischen dieser virtuellen Maschine und der Verifizierungsentität (EV) einzurichten, wobei Stammfunktionen des Root of Trust (RoT), die auf ein kryptographisches Datenelement (TOK) angewendet werden, zum Einrichten dieses zweiten sicheren Kanals (CS1) erforderlich sind;
- Zertifizierungsdaten (DA_VM1) der virtuellen Maschine (VM1) in dem zweiten sicheren Kanal (CS1), der für diese virtuelle Maschine (VM1) eingerichtet wurde, zu senden, wobei diese Zertifizierungsdaten (DA_VM1) von der virtuellen Maschine (VM1) unter Verwendung von Diensten eines virtualisierten Root of Trust (vRoT1) erhalten werden, welcher der virtuellen Maschine (VM1) zugeordnet ist.

7. Verifizierungsentität (EV), die dazu ausgestaltet ist, Zertifikate bei einer virtualisierten Rechnerplattform (PIV) anzufordern, die einen Root of Trust (RoT), einen Hypervisor (VMM) und mindestens eine virtuelle Maschine (VM1, VM2) umfasst, wobei der Hypervisor (VMM) einen virtualisierten Root of Trust (vRoT1, vRoT2) je virtuelle Maschine (VM1, VM2) implementiert und Dienste des Root of Trust (RoT) anbietet, wobei eine virtuelle Maschine (VM1, VM2) Zertifizierungsdaten (DA_VM1, DA_VM2) unter Verwendung von Diensten des virtualisierten Root of Trust (vRoT1, vRoT2) erhält, der dieser virtuellen Maschine (VM1, VM2) zugeordnet ist, wobei die Verifizierungsentität (EV) umfasst:
- ein Modul zum Einrichten eines ersten sicheren Kanals (CSO) zwischen der Verifizierungsentität (EV) und dem Hypervisor (VMM);
- ein Kommunikationsmodul, das dazu ausgestaltet ist:
- Zertifizierungsdaten (DA_VMM) des Hypervisors in dem ersten sicheren Kanal (CSO) zu empfangen, wobei die Zertifizierungsdaten (DA_VMM) unter Verwendung von Diensten des Root of Trust (RoT) erhalten werden;
- mindestens ein kryptographisches Datenelement (TOK) an den Hypervisor (VMM) in dem ersten sicheren Kanal (CSO) zu senden, wobei das mindestens eine kryptographische Datenelement (TOK) für den Root of Trust (RoT) bestimmt ist, um einen zweiten sicheren Kanal (CS1, CS2) zwischen der Verifizierungsentität (EV) und jeder virtuellen Maschine (VM1, VM2) einzurichten;
- ein Modul zum Einrichten des zweiten sicheren Kanals (CS1, CS2) zwischen der Verifizierungsentität (EV) und jeder virtuellen Maschine (VM1, VM2), wobei Stammfunktionen des Root of Trust (RoT), die auf das mindestens eine kryptographische Datenelement (TOK) angewendet werden, zum Einrichten des zweiten sicheren Kanals (CS1, CS2) erforderlich sind;
- ein Kommunikationsmodul, das dazu ausgestaltet ist, von jeder virtuellen Maschine (VM1, VM2) in dem zweiten sicheren Kanal (CS1, CS2), der für die virtuelle Maschine (VM1, VM2) eingerichtet wurde, Zertifizierungsdaten (DA_VM1, DA_VM2) dieser virtuellen Maschine (VM1, VM2) zu empfangen.

8. Menge von Computerprogrammen, umfassend:
- ein Computerprogramm (CLT_TLS_VMM) auf einem Informationsmedium, wobei das Programm geeignet ist, von einem Hypervisor (VMM) einer virtualisierten Rechnerplattform (PIV) implementiert zu werden, wobei die virtualisierte Rechnerplattform (PIV) einen Root of Trust (RoT) und mindestens eine virtuelle Maschine (VM1, VM2) umfasst, wobei dieses Programm Anweisungen umfasst, die dazu ausgestaltet sind:
- einen ersten sicheren Kanal (CSO) zwischen dem Hypervisor (VMM) und einer Verifizierungsentität (EV) einzurichten;
- Zertifizierungsdaten (DA_VMM) dieses Hypervisors in dem ersten sicheren Kanal (CSO) an die Verifizierungsentität (EV) zu senden, wobei die Zertifizierungsdaten unter Verwendung von Diensten des Root of Trust (RoT) der Plattform (PIV) erhalten werden;
- durch den Hypervisor mindestens ein kryptographisches Datenelement (TOK) von der Verifizierungsentität (EV) in dem ersten sicheren Kanal (CSO) zu empfangen, wobei dieses kryptographische Datenelement (TOK) für den Root of Trust (RoT) bestimmt ist, um einen zweiten sicheren Kanal (CS1, CS2) zwischen jeder virtuellen Maschine (VM1, VM2) und der Verifizierungsentität (EV) einzurichten;
- ein Computerprogramm auf einem Informationsmedium, wobei eine Instanz (CLT_TLS_VM1, CLT_TLS_VM2) dieses Programms geeignet ist, von jeder virtuellen Maschine (VM1, VM2) der virtualisierten Rechnerplattform (PIV) implementiert zu werden, wobei diese Programminstanz Anweisungen umfasst, die dazu ausgestaltet sind:
- den zweiten sicheren Kanal (CS1) zwischen der virtuellen Maschine (VM1) und der Verifizierungsentität (EV) einzurichten, wobei Stammfunktionen des Root of Trust (RoT), die auf ein kryptographisches Datenelement (TOK) angewendet werden, zum Einrichten dieses zweiten sicheren Kanals (CS1) erforderlich sind;
- Zertifizierungsdaten (DA_VM1) der virtuellen Maschine (VM1) in dem zweiten sicheren Kanal (CS1) zu senden, wobei die Zertifizierungsdaten von der virtuellen Maschine (VMi) unter Verwendung von Diensten eines virtualisierten Root of Trust (vRoT1) des Hypervisors (VMM) erhalten werden, welcher der virtuellen Maschine (VM1) zugeordnet ist und Dienste des Root of Trust (RoT) anbietet.

9. Computerprogramm auf einem Informationsmedium, wobei das Programm geeignet ist, von einem Computer implementiert zu werden, wobei dieses Programm Anweisungen umfasst, die zur Implementierung eines Verfahrens zum Anfordern von Zertifikaten (PDA) nach einem der Ansprüche 2 bis 5 zu angepasst sind.

10. Speichermedium, das von einem Computer (PIV, EV) gelesen werden kann und auf dem mindestens gespeichert ist:
- ein Computerprogramm nach Anspruch 9; oder
- ein Computerprogramm einer Menge von Computerprogrammen nach Anspruch 8.

## Claims

1. Method (PFA) for providing attestations that is implemented by a virtualized computing platform (PIV) comprising a root of trust (RoT), a hypervisor (VMM) and at least one virtual machine (VM1, VM2), the hypervisor (VMM) implementing one virtualized root of trust (vRoT1, vRoT2) per virtual machine (VM1, VM2) and providing services of the root of trust (RoT), this method comprising:
- a step of setting up (F10) a first secure channel (CSO) between said hypervisor (VMM) and a verification entity (EV);
- a step of sending (F20) attestation data (DA_VMM) of this hypervisor over said first secure channel (CSO) to the verification entity (EV), said attestation data being obtained using services of said root of trust (RoT) ;
- a step of said hypervisor (VMM) receiving (F30), over said first secure channel (CS0), from said verification entity (EV), at least one cryptographic datum (TOK) intended for said root of trust (RoT), with a view to setting up (F50) a second secure channel (CS1, CS2) between each said virtual machine (VM1, VM2) and said verification entity (EV);
- a step of setting up (F50) the second secure channel (CS1, CS2) between each said virtual machine (VM1, VM2) and said verification entity (EV), primitives of the root of trust (RoT) that are applied to a said cryptographic datum (TOK) being required to set up this second secure channel (CS1, CS2);
- a step of sending (F60) attestation data (DA_VM1, DA_VM2) of each said virtual machine (VM1, VM2) over the second secure channel (CS1, CS2) set up for said virtual machine (VM1, VM2), said attestation data (DA_VM1, DA_VM2) being obtained by said virtual machine (VM1, VM2) using services of the virtualized root of trust (vRoT1, vRoT2) associated with said virtual machine (VM1, VM2).

2. Method (PDA) for requesting attestations from a virtualized computing platform (PIV) comprising a root of trust (RoT), a hypervisor (VMM) and at least one virtual machine (VM1, VM2), the hypervisor (VMM) implementing one virtualized root of trust (vRoT1, vRoT2) per virtual machine (VM1, VM2) and providing services of the root of trust (RoT), a said virtual machine (VM1, VM2) obtaining attestation data (DA_VM1, DA_VM2) using services of the virtualized root of trust (vRoT1, vRoT2) associated with this virtual machine (VM1, VM2), this method being implemented by a verification entity (EV) and comprising:
- a step of setting up (D10) a first secure channel (CSO) between said verification entity (EV) and said hypervisor (VMM);
- a step of receiving (D20) attestation data (DA_VMM) of said hypervisor over the first secure channel (CS0), the attestation data (DA_VMM) being obtained using services of said root of trust (RoT);
- a step of sending (D30), to said hypervisor (VMM), over said first secure channel (CS0), at least one cryptographic datum (TOK) intended for the root of trust (RoT), with a view to setting up (D50) a second secure channel (CS1, CS2) between said verification entity (EV) and each said virtual machine (VM1, VM2);
- a step of setting up (D50) the second secure channel (CS1, CS2) between said verification entity (EV) and each said virtual machine (VM1, VM2), primitives of the root of trust (RoT) that are applied to said at least one cryptographic datum (TOK) being required to set up this second secure channel (CS1, CS2);
- a step of receiving (D60), from each virtual machine (VM1, VM2), over the second secure channel (CS1, CS2) set up for said virtual machine (VM1, VM2), attestation data (DA_VM1, DA_VM2) of this virtual machine (VM1, VM2).

3. Method (PDA) for requesting attestations according to Claim 2, further comprising a step of producing (D70) a deep-attestation report (ATT_REP) for said platform (PIV), this report being positive if said second secure channel (CS1, CS2) has been set up for said virtual machine (VM1, VM2), said report (ATT_REP) comprising:
- the attestation data (DA_VMM) of the hypervisor; and
- the attestation data (DA_VMi) of each virtual machine (VMi).

4. Method (PDA, PFA) according to any of Claims 1 to 3, wherein:
- said verification entity (EV) comprises a server (TLS SRV_TLS);
- said hypervisor (VMM) comprises a client (TLS CLT_TLS_VMM),
said client and said server being configured to set up between them said first secure channel (CSO) in the context of a first session (S0) according to the TLS protocol,
said first secure channel being used:
- by said hypervisor to send (F20) its said attestation data (DA_VMM) to the verification entity (EV); and
- by said verification entity (EV) to send (D30) said at least one cryptographic datum (TOK) to said hypervisor (VMM) .

5. Method (PDA, PFA) according to Claim 4, wherein:
- said at least one cryptographic datum comprises, associated with each said virtual machine (VM1, VM2), a ticket (TICKi) and a one-time random variable (NONCEi);
- said root of trust (RoT) is configured to compute, for each virtual machine (VM1), a pre-shared key (PSK1) using the one-time random variable (NONCE1) associated with this virtual machine;
- said shared key (PSK1) is used by said virtual machine to request (F50) the set-up of a second session (S1) with said verification entity (EV), said second session (S1) being a resumption of said first session (S0) according to the TLS protocol;
- said second secure channel (CS1) used by said virtual machine (VM1) to send (F60) its attestation data (DA_VM1) to said verification entity is set up (F50) in the context of said second session (S1).

6. Virtualized computing platform (PIV) comprising a root of trust (RoT), a hypervisor (VMM) and at least one virtual machine (VM1, VM2), the hypervisor (VMM) implementing one virtualized root of trust (vRoT1, vRoT2) per virtual machine (VM1, VM2) and offering services of the root of trust (RoT), wherein:
- said hypervisor (VMM) is configured to:
- set up a first secure channel (CSO) with a verification entity (EV);
- obtain attestation data (DA_VMM) of this hypervisor using services of said root of trust (RoT);
- send said attestation data (DA_VMM) of this hypervisor over said first secure channel (CSO) to the verification entity (EV);
- receive, from said verification entity (EV), over said first secure channel (CS0), at least one cryptographic datum (TOK) intended for the root of trust (RoT), with a view to setting up a second secure channel (CS1, CS2) between each said virtual machine (VM1, VM2) and said verification entity (EV);
- each said virtual machine (VM1) is configured to:
- set up the second secure channel (CS1) between this virtual machine and said verification entity (EV), primitives of the root of trust (RoT) that are applied to a said cryptographic datum (TOK) being required to set up this second secure channel (CS1);
- sending attestation data (DA_VM1) of said virtual machine (VM1) over the second secure channel (CS1) set up for this virtual machine (VM1), these attestation data (DA_VM1) being obtained by said virtual machine (VM1) using services of a virtualized root of trust (vRoT1) associated with said virtual machine (VM1).

7. Verification entity (EV) configured to request attestations from a virtualized computing platform (PIV) comprising a root of trust (RoT), a hypervisor (VMM) and at least one virtual machine (VM1, VM2), the hypervisor (VMM) implementing one virtualized root of trust (vRoT1, vRoT2) per virtual machine (VM1, VM2) and providing services of the root of trust (RoT), a said virtual machine (VM1, VM2) obtaining attestation data (DA_VM1, DA_VM2) using services of the virtualized root of trust (vRoT1, vRoT2) associated with this virtual machine (VM1, VM2), said verification entity (EV) comprising:
- a module for setting up a first secure channel (CSO) between said verification entity (EV) and said hypervisor (VMM) ;
- a communication module configured to:
- receive attestation data (DA_VMM) of said hypervisor over said first secure channel (CS0), the attestation data (DA_VMM) being obtained using services of said root of trust (RoT);
- send at least one cryptographic datum (TOK) to said hypervisor (VMM) over said first secure channel (CS0), said at least one cryptographic datum (TOK) being intended for the root of trust (RoT), with a view to setting up a second secure channel (CS1, CS2) between said verification entity (EV) and each said virtual machine (VM1, VM2);
- a module for setting up the second secure channel (CS1, CS2) between said verification entity (EV) and each said virtual machine (VM1, VM2), primitives of the root of trust (RoT) that are applied to said at least one cryptographic datum (TOK) being required to set up this second secure channel (CS1, CS2);
- a communication module configured to receive, from each virtual machine (VM1, VM2), over the second secure channel (CS1, CS2) set up for said virtual machine (VM1, VM2), attestation data (DA_VM1, DA_VM2) of this virtual machine (VM1, VM2).

8. Set of computer programs comprising:
- a computer program (CLT_TLS_VMM) on an information medium, said program being capable of being implemented by a hypervisor (VMM) of a virtualized computing platform (PIV), the virtualized computing platform (PIV) comprising a root of trust (RoT) and at least one virtual machine (VM1, VM2), this program comprising instructions configured to:
- set up a first secure channel (CSO) between said hypervisor (VMM) and a verification entity (EV);
- send attestation data (DA_VMM) of this hypervisor over said first secure channel (CSO) to the verification entity (EV), said attestation data being obtained using services of the root of trust (RoT) of said platform (PIV) ;
- receive, by means of said hypervisor, at least one cryptographic datum (TOK) from said verification entity (EV), over said first secure channel (CS0), this cryptographic datum (TOK) being intended for the root of trust (RoT), with a view to setting up a second secure channel (CS1, CS2) between each said virtual machine (VM1, VM2) and said verification entity (EV); and
- a computer program on an information medium, an instance (CLT_TLS_VM1, CLT_TLS_VM2) of this program being capable of being implemented by each said virtual machine (VM1, VM2) of said virtualized computing platform (PIV), this instance of the program comprising instructions configured to:
- set up the second secure channel (CS1) between said virtual machine (VM1) and said verification entity (EV), primitives of the root of trust (RoT) that are applied to a said cryptographic datum being required to set up this second secure channel (CS1);
- send attestation data (DA_VM1) of said virtual machine (VM1) over the second secure channel (CS1), said attestation data being obtained by said virtual machine (VMi) using services of a virtualized root of trust (vRoT1) of said hypervisor (VMM) associated with said virtual machine (VM1) and providing services of said root of trust (RoT).

9. Computer program on an information medium, said program being capable of being implemented by a computer, this program comprising instructions configured to implement a method (PDA) for requesting attestations according to any of Claims 2 to 5.

10. Recording medium that is readable by a computer (PIV, EV) and on which is recorded at least:
- a computer program according to Claim 9; or
- a computer program of a set of computer programs according to Claim 8.
